# EUROPÄISCHE PATENTSCHRIFT

(11) **EP 4 136 137 B1**
(45) Veröffentlichungstag und Bekanntmachung des Hinweises auf die Patenterteilung: **26.08.2026**
(21) Anmeldenummer: 20719167.7
(22) Anmeldetag: 14.04.2020
(51) Int. Cl.: C08G 77/18, C08G 77/20, C08G 77/26, C08G 77/28, C08G 77/388, C08K 5/544, C09D 183/08, C08G 77/392

(54) **POLYSILOXANE MIT STRAHLEN- UND FEUCHTIGKEITSVERNETZBAREN GRUPPEN**
POLYSILOXANES WITH RADIATION- AND MOISTURE-CROSS-LINKABLE GROUPS
POLYSILOXANES À GROUPES RÉTICULABLES PAR RAYONNEMENT ET PAR L'HUMIDITÉ

(43) Veröffentlichungstag der Anmeldung: 22.02.2023
(73) Patentinhaber: Wacker Chemie AG, 81671 München (DE)
(72) Erfinder: STEPP, Michael, 5123 Überackern (AT); JIN, HyungDae, San Ramon, California 94583 (US); KARABIYIK, Ufuk, Ann Arbor, Michigan 48103 (US); MAKKI, Rabih, Silverspring, Maryland 20910 (US)
(74) Vertreter: Mai, Marit
(86) Internationale Anmeldenummer: PCT/EP2020/060378
(87) Internationale Veröffentlichungsnummer: WO 2021/209113

(56) Entgegenhaltungen:
- WO-A1-2019/005393

## Beschreibung

Die Erfindung betrifft Organo(poly)siloxane, die sowohl bei Zutritt von Feuchtigkeit als auch durch Bestrahlung vernetzbar sind, sowie Organo(poly)siloxanmischungen enthaltend diese Organo(poly)siloxane.

Organo(poly)siloxanzusammensetzungen, die über diese zwei verschiedenen Vernetzungsmechanismen aushärten, werden im allgemeinen als Dual-Cure-Systeme bezeichnet und sind bereits bekannt.

Ein Problem rein feuchtigkeitshärtender Organo(poly)siloxanzubereitungen ist, dass die Geschwindigkeit der Härtungsreaktion dieser Zubereitungen von der Wasserdiffusion durch die Oberfläche abhängt. Ab einer bestimmten Schichtdicke kann die Durchhärtung nicht mehr so schnell wie an der Oberfläche, z. B. innerhalb einiger Sekunden, ablaufen, so dass die härtbare Organo(poly)siloxanzubereitung dieses Typs nicht für Anwendungen brauchbar ist, bei denen die verklebenden oder abdichtenden Eigenschaften des Stoffes in kurzer Zeit erreicht werden müssen. Andererseits besitzen strahlenhärtbare Organo(poly)-siloxanmischungen den Nachteil, dass sie zwar dort schnell aushärten, wo sie direkter Strahlung ausgesetzt sind, aber in Schattenbereichen die Härtung nur langsam fortschreitet.

Zur Vermeidung dieser Nachteile wurden daher Versuche unternommen, beide Vernetzungsarten zu kombinieren.

Beispielsweise versuchte man dies durch Reaktion von OHterminierten Polysiloxanen mit trialkoxysilyl-funktionellen Acrylderivaten. Hierzu sei beispielsweise auf WO17201229A1 verwiesen, in denen Organo(poly)siloxanmassen beschrieben werden, die neben acrylfunktionellen Einheiten noch hydrolysierbare Gruppen, wie Alkoxyreste, aufweisen. Für eine ausreichend schnelle Feuchtigkeitsvernetzung müssen bei diesen Systemen Katalysatoren zugesetzt werden. Meist handelt es sich um toxikologisch bedenkliche Zinnverbindungen.

Während in diesem Fall die Photovernetzung auf einer Acrylpolymerisation beruht, gab es Bestrebungen, die radikalisch induzierte Thiol-En-Vernetzung dafür zu nutzen, da sie einige Vorteile gegenüber der Acrylvernetzung aufweist, wie z.B. geringere Inhibierung durch Luftsauerstoff und Ausbildung eines homogeneren, spannungsfreien Netzwerks (s. Hoyle, C.E., Bowman, C.N., Angew. Chem. 122, 1584 (2010), Kap. 2.1.1).

In WO2019/005393 sowie WO2019/028013 sind beispielsweise Mischungen aus Polysiloxanen mit aliphatisch ungesättigten Resten und Polysiloxanen mit Thiolfunktionen, die jeweils feuchtigkeitsvernetzbare Alkoxyreste tragen können, beschrieben. In diesem Fall kommt es in Schattenbereichen zwar nicht zum Auswandern von unvernetzten Anteilen, jedoch ist der Aufwand, zwei separate Polymere herzustellen, recht hoch und verschlechtert die Wirtschaftlichkeit. Außerdem ist die Anwesenheit eines Vernetzungskatalysators notwendig, der sich nachteilig auf die Lagerstabilität der Mischung auswirken kann. Bei Anwendungen in Kontakt mit elektronischen Bauelementen sind insbesondere metallhaltige Katalysatoren aufgrund ihrer ionischen Eigenschaften unerwünscht.

In DE4120418A1 (WA9033S Wacker Chemie GmbH; ausgegeben am 20.06.1991) ist ein solches System beschrieben, das sowohl feuchtigkeitsvernetzbare H-Alkoxysilyl- als auch strahlenvernetzbare Thioalkyl- und Vinyl-Reste in einem Polymer enthält. Dadurch kommt es nicht zum Auswandern von unvernetzten Bestandteilen in Schattenbereichen. Zur Beschleunigung der Feuchtigkeitsvernetzung genügen als Katalysatoren langkettige Carbonsäuren wie Ölsäure, diese haben jedoch korrosive Eigenschaften und wirken sich negativ auf die Lagerstabilität der anwendungsfertigen Gesamtmischung aus. Nach kurzer Zeit erfolgt selbst in geschlossenen Gebinden Wasserstoffentwicklung, was zu Druckaufbau und beim Entspannen zu zündfähigen Gasgemischen führt. Diese Mischungen stellen deshalb ein Sicherheitsrisiko dar.

Gegenstand der Erfindung sind Organo(poly)siloxane (A), bestehend aus Einheiten der allgemeinen Formel (I)

**RₙSiO_{(4-n/2}** (I)

wobei
- **n**: für 0, 1, 2 oder 3 steht, wobei der Anteil der Einheiten mit n = 0 nicht mehr als 50 Mol-% und der Anteil der Einheiten mit n = 1 nicht mehr als 60 Mol-%, jeweils bezogen auf alle Einheiten der allgemeinen Formel (I) beträgt,
- **R**: ausgewählt ist aus den Resten **R¹, -OR², R^{u}, R^{s}** und **Q,** wobei
- **R¹**: einen einwertigen substituierten oder unsubstituierten Kohlenwasserstoffrest mit 1 bis 18 C-Atomen bedeutet,
- **R²**: ein Wasserstoffatom oder einen einwertigen, substituierten oder unsubstituierten Kohlenwasserstoffrest mit 1 bis 6 C-Atomen bedeutet,
- **R^{u}**: einen einwertigen aliphatisch ungesättigten Kohlenwasserstoffrest mit 2 bis 18 C-Atomen bedeutet,
- **R^{s}**: einen einwertigen thiolfunktionellen Kohlenwasserstoffrest mit 1 bis 18 C-Atomen bedeutet,
- **Q**: ein stickstofffunktioneller Rest der Formel (II) ist

**-CR⁵R⁶-NR⁴R³** (II),

wobei
- **R³** und **R⁴**: unabhängig voneinander Wasserstoff oder einen substituierten oder unsubstituierten Kohlenwasserstoffrest mit 1 bis 18 C-Atomen bedeuten und,
- **R⁵** und **R⁶**: unabhängig voneinander Wasserstoff oder den Methylrest bedeuten,
mit der Maßgabe, dass das Organo(poly)siloxan (A) pro Molekül mindestens eine Einheit der allgemeinen Formel (III),

**Q-Si(OR⁷)₂O_{1/2}** (III)

in der **R⁷** die Bedeutungen von **R²** aufweist;
mindestens 1 aliphatisch ungesättigten Rest **R^{u};**
sowie mindestens 2 thiolfunktionelle Reste **R^{s}** enthält.

Mit den Organo(poly)siloxanen (A), die sowohl feuchtigkeitsals auch strahlenvernetzbare Gruppen in einem Molekül enthalten, sind lagerstabile Organo(poly)siloxanmassen (M) herstellbar, die keine Katalysatoren für die Feuchtigkeitsvernetzung benötigen.

Bei den Resten **R¹** handelt es sich vorzugsweise um lineare oder verzweigte, gegebenenfalls substituierte Alkyl- und Arylreste mit 1 bis 18 C-Atomen, die durch nicht benachbarte Sauerstoffatome unterbrochen sein können.

Beispiele für Reste **R¹** sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste wie der n-Octylrest, der 2-Ethyl-1-hexylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Hexadecylreste, wie der n-Hexadecylrest, Cycloalkylreste, wie Cyclopentyl-, Cyclohexyl-, Cycloheptylrest und Methylcyclohexylreste, Arylreste, wie der Phenyl- und der Naphthylrest, Alkarylreste, wie o-, m-, p- Tolylreste, Xylylreste und Ethylphenylreste; Aralkylreste, wie der Benzylrest, der 2-Phenyl-1-propylrest oder der alpha- und der beta-Phenylethylrest.

Beispiele für substituierte Kohlenwasserstoffreste **R¹** sind Alkoxyalkylreste, wie der 2-Methoxy-1-ethylrest, der Methoxymethylrest, Halogenalkylreste, wie Chlormethylrest, der 3-Chlorpropylrest, oder der 3,3,3-Trifluorpropylrest und Acyloxyalkylreste, wie der Acetoxyethylrest.

Besonders bevorzugt sind der Methyl-, der Phenyl- und der 3,3,3-Trifluorpropylrest, insbesondere der Methylrest.

Bei den Resten **R²** und **R⁷** handelt es sich vorzugsweise um einwertige, gegebenenfalls substituierte Alkylreste mit 1 bis 6 C-Atomen. Beispiele für Reste **R²** und **R⁷** sind Alkylreste, wie der Methyl-, Ethyl-, n- Propyl-, iso-Propyl-, n-Butyl-, iso-Butyl-, tert.-Butylrest, sowie substituierte Reste wie der 2-Methoxy-1-ethyl- oder der 2-n-Butoxy-1-ethylrest, wobei der Methyl-, der Ethyl-, der n-Propyl- und der iso-Propylrest besonders bevorzugt sind, insbesondere der Methyl- und der Ethylrest, aufgrund seiner geringeren Toxizität ganz besonders der Ethylrest.

Bei Rest **R^{u}** handelt es sich bevorzugt um Kohlenwasserstoffreste mit mindestens einer aliphatischen Kohlenstoff-Kohlenstoff-Mehrfachbindung mit 2 bis 18 Kohlenstoffatomen, die auch substituiert oder durch nicht benachbarte Sauerstoffatome unterbrochen sein können.

Beispiele für Reste **R^{u}** sind der Vinylrest, Allylrest, 1-Propen-1-ylrest, Propargylrest, Allenylrest, n-But-3-enylrest, n-Hex-5-enylrest, n-Undec-10-enylrest, 3-Allyloxyphenylrest, 4-Allyloxyphenylrest, 4-Allyloxy-2-methylphenylrest, 4-Allyloxybenzylrest, 4-Allyloxy-phenoxy-phenylrest und Prop-2- inoxy-n-propylrest, endocyclische Kohlenstoff-Kohlenstoff- Mehrfachbindung enthaltende Reste, wie beispielsweise der Cyclopentenyl-, der Cylohexenyl-, der Cycloheptenyl-, der Cylooctenylrest, der 2-Cyclohexenyl-1-ethylrest oder der 2-Norbornenyl-ethylrest. Bevorzugt handelt es sich bei Rest **R^{u}** um einen Vinyl- oder Allylrest, besonders bevorzugt um einen Vinylrest.

Bei den einwertigen thiolfunktionellen Resten **R^{s}** handelt es sich vorzugsweise um thiolfunktionelle Kohlenwasserstoffreste, die durch nicht benachbarte Sauerstoffatome unterbrochen sein können, mit 1 - 18 Kohlenstoffatomen und mindestens einer SH-Gruppe.

Beispiele für Rest **R^{s}** sind -(CH₂)₃SH, -(CH₂)₆SH, -(CH₂)₄CH(SH)CH₃, 2-(3-Mercapto-1-cyclohexyl)-1-ethyl-, 2-(3,4-Dimercapto-1-cyclohexyl) -1-ethyl-, -(CH₂)₃O(CH₂)₃SH, -(CH₂)₃OCH₂CH(SH)CH₂SH, - (CH₂)₃OCH₂CH(SH)CH₃, -(CH₂)₃OOCCH₂SH, -(CH₂)₃OOC(CH₂)₂SH, - (CH₂)₈SH, -(CH₂)₆CH(SH)CH₃, -(CH₂)₇SH, -CH₂SH, -(CH₂)₂SH, - (CH₂)₅CH=CH(CH₂)₅SH, -(CH₂)₅CH=CH(CH₂)₃CH(SH)CH₃, - (CH₂)₅CH (SH) (CH₂)₄CH=CH₂, -(CH₂)₆CH(SH) (CH₂)₃CH=CH₂, - (CH₂)₆CH(SH)(CH₂)₃CH(SH)CH₃, -(CH₂)₅CH(SH)(CH₂)₄CH(SH)CH₃, - (CH₂)₅CH(SH)(CH₂)₆SH, -(CH₂)₆CH(SH)(CH₂)₆SH, 1-Mercapto-4-cyclododec-8-enyl-, 1-Mercapto-5-cyclododec-8-enyl-, 1,6-Dimercapto-10-cyclododecyl-, 1-Mercapto-2-cyclobutyl-, 1-Mercapto-3-cyclobutyl-, 1-Mercapto-2-cyclopentyl-, 1-Mercapto-3-cyclopentyl-, 1-Mercapto-2-cyclohexyl-, 1-Mercapto-3-cyclohexyl-, 1-Mercapto-4-cyclohexyl-, 1-Mercapto-2-cycloheptyl-, 1-Mercapto-3-cycloheptyl-, 1-Mercapto-4-cycloheptyl-, 1-Mercapto-2-cyclooctyl-, 1-Mercapto-3-cyclooctyl-, 1-Mercapto-4-cyclooctyl-, 1-Mercapto-5-cyclooctyl-, 1,2-Dimercapto-4-cyclohexyl-, 1-Mercaptocyclohex-3-en-3-yl-, 1-Mercaptocyclohex-3-en-4-yl-, 1-Mercaptocyclohex-2-en-4-yl-, - (CH₂)₃SCH₂CH(SH)CH₂SH, -(CH₂)₃S(CH₂)₃SH, -ortho- (CH₂)₃OC₆H₄SH, - meta-(CH₂)₃OC₆H₄SH, -para- (CH₂)₃OC₆H₄SH, -ortho-(CH₂)₃OC₆H₄O(CH₂)₃SH, -meta-(CH₂)₃OC₆H₄O(CH₂)₃SH, -para-(CH₂)₃OC₆H₄O(CH₂)₃SH, -ortho-(CH₂)₃C₆H₄SH, -meta-(CH₂)₃C₆H₄SH, - para-(CH₂)₃C₆H₄SH, -ortho-C₆H₄SH, -meta-C₆H₄SH, -para-C₆H₄SH, - (CH₂)OOC(CH₂)₁₁SH und -(CH₂)₃OOC(CH₂)₉CH(SH)CH₃.

Bevorzugt handelt es sich bei Rest **R^{s}** um lineare oder cyclische Thioalkylreste mit 1 bis 8 Kohlenstoffatom(en), wobei lineare Thioalkylreste mit 3 bis 6 Kohlenstoffatomen, insbesondere -(CH₂)₃SH, -(CH₂)₆SH und - (CH₂)₄CH(SH)CH₃ besonders bevorzugt sind.

Den Resten **Q** der allgemeinen Formel (II) kommt eine besondere Bedeutung zu, da sie aufgrund ihrer Struktur eine besonders rasche Feuchtigkeitsvernetzung ermöglichen und auf einen Katalysator somit vorzugsweise verzichtet werden kann.

Bei den Resten **R³** und **R⁴** handelt es sich vorzugsweise um Wasserstoff, gegebenenfalls substituierte aliphatische Kohlenwasserstoffe, die durch nicht benachbarte Sauerstoffatome unterbrochen sein können, wobei die Reste **R³** und **R⁴** auch in eine cyclische Struktur eingebunden sein können oder gegebenenfalls substituierte aromatische Kohlenwasserstoffe mit vorzugsweise 1 bis 8 C-Atomen.

Beispiele für Reste **R³** und **R⁴** sind Alkylreste, wie der Methyl-, Ethyl-, n- Propyl-, iso-Propyl-, Allyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste wie der n-Heptylrest, Octylreste wie der n-Octylrest, der 2,2,3,3-Tetramethylbutylrest oder der 2-Ethyl-1-hexylrest, Cycloalkylreste, wie Cyclopentyl- und der Cyclohexylrest, Arylreste wie der Phenylrest, Alkarylreste, wie o-, m-, p- Tolylreste, Xylylreste, Alkarylreste wie der Benzylrest, substituierte Alkylreste, wie der 2-Methoxyethyl-, 2-Ethoxyethylrest, Isopropoxyethylrest, 3-Methoxypropylrest, 3-Ethoxypropylrest, 3-Isopropoxypropylrest, 3-Butoxypropylrest, 2-(N,N-Dimethyl-amino)-ethylrest, substituierte Arylreste wie der 4-Methoxyphenylrest, Heteroaromaten, wie der 2-Pyridylrest, der N-Imidazolylrest oder der 2-Tetrahydrofuranylrest.

Beispiele für Einheiten **-NR⁴R³,** bei denen **R³** und **R⁴** als cyclische Struktur vorliegen, sind der N-Imidazolylrest, N-Pyrrolylrest, N-3-Pyrrolinylrest, N-Pyrrolidinylrest, der N-Piperidinylrest, der N-4-Methylpiperazinylrest, der N-Pyrrolidinonylrest oder der N-Morpholinylrest.

Besonders bevorzugt handelt es sich bei den Einheiten **-NR⁴R³** um die Di-n-butylamino-, die Anilino-, die Cylohexylamino- und die N-Morpholino-Einheit, Ganz besonders bevorzugt um die Di-n-butylamino- und die Cylohexylamino-Einheit.

Bei den Resten **R⁵** und **R⁶** handelt es sich vorzugsweise um Wasserstoff.

Bei den erfindungsgemäßen Organo(poly)siloxanen (A) handelt es sich vorzugsweise um lineare, kettenförmige Polysiloxane aus vorzugsweise insgesamt durchschnittlich 10 bis 400, besonders bevorzugt 10 bis 200, insbesondere 10 bis 100 Einheiten der allgemeinen Formel (I).

Vorzugsweise beträgt der Anteil der Einheiten mit n = 0 nicht mehr als 20 Mol-%, insbesondere nicht mehr als 10 Mol-% bezogen auf alle Einheiten der allgemeinen Formel (I).

Vorzugsweise beträgt der Anteil der Einheiten mit n = 1 nicht mehr als 20 Mol-%, insbesondere nicht mehr als 10 Mol-% bezogen auf alle Einheiten der allgemeinen Formel (I).

Vorzugsweise sind mindestens 0,5 Mol-% aller Einheiten der allgemeinen Formel (I) eine Einheit der allgemeinen Formel (III).

Der Anteil an Alkoxyresten **OR⁷** in den erfindungsgemäßen Polysiloxanen (A) liegt vorzugsweise bei 1 bis 40 Mol-%, besonders bevorzugt zwischen 2 und 15 Mol-%, insbesondere zwischen 2 und 10 Mol-% bezogen auf alle Siloxaneinheiten der allgemeinen Formel (I).

Das erfindungsgemäße Organo(poly)siloxan (A) enthält vorzugsweise mindestens 1 aliphatisch ungesättigten Rest **R^{u}** sowie mindestens 2 thiolfunktionelle Reste **R^{s}.** Um eine ausreichende Vernetzungsdichte zu gewährleisten, liegt die Konzentration der strahlenvernetzbaren Reste **R^{u}** und **R^{s}** jeweils vorzugsweise in einem Bereich von 1 - 30 Mol-%, besonders bevorzugt zwischen 3 und 20 Mol-%, insbesondere zwischen 5 und 15 Mol-% bezogen auf alle Siloxaneinheiten der allgemeinen Formel (I). Das Molverhältnis der Reste **R^{s}** zu den Resten **R^{u}** liegt vorzugsweise im Bereich zwischen 0,3 und 5, besonders bevorzugt zwischen 0,4 und 4, insbesondere zwischen 0,5 und 3.

Die erfindungsgemäßen Organo(poly)siloxane (A) können nach in der Silicon-Chemie bekannten Methoden hergestellt werden. Bevorzugt ist die Kondensation von Alkoxysilanen der allgemeinen Formel (IV)

**(R²O)₃Si-CR⁵R⁶-NR⁴R³** (IV)

mit Silanolgruppen eines Polysiloxans (V), welches sowohl aliphatisch ungesättigte Reste **R^{u}** als auch thiolfunktionelle Gruppen **R^{s}** enthält. Die Herstellung dieses silanolhaltigen Polysiloxans (V)ist beispielsweise in DE4120418A1 beschrieben. Weil die thiolfunktionellen Gruppen **R^{s}** vorzugsweise über die entsprechenden thiolfunktionellen Alkoxysilane in das Polysiloxangerüst eingebaut werden, können die Polysiloxane (V) herstellungsbedingt bereits Alkoxyreste enthalten, die bei der Kondensationsreaktion mit Alkoxysilanen der allgemeinen Formel (IV) vorzugsweise erhalten bleiben.

In einer bevorzugten Ausführungsform weist das Organo(poly)-siloxan (A) terminale Einheiten **(R²O)₂R¹SiO_{(1/2)}** auf, die aus dem Polysiloxan (V) stammen. Vorzugsweise beträgt im Organo(poly)-siloxan (A) das Verhältnis der Einheiten der allgemeinen Formel (III) zu terminalen Einheiten der Formel **(R²O)₂R¹SiO_{(1/2)}** 20: 80 bis 90:10, besonders bevorzugt 40:60 bis 80:20.

Beispiele für Alkoxysilane der allgemeinen Formel (IV) sind N,N-Dimethylaminomethyl-triethoxysilan, N,N-Diethylaminomethyl-triethoxysilan, N,N-Diisopropylaminomethyl-triethoxysilan, N,N-Diethylaminomethyl-triisobutoxysilan, N,N-Diisopropylaminomethyl-triisopropoxysilan, N-Butylaminomethyl-triethoxysilan, N,N-Dibutylaminomethyl-triethoxysilan, N-Cyclohexylaminomethyltriethoxysilan, N-Cyclohexyl-N-methylaminomethyltriethoxysilan, N-Morpholinomethyltriethoxysilan, N-Anilinomethyltrimethoxysilan, N-Pyrrolidinomethyltriethoxysilan, 1-[(Triethoxysilyl)methyl]-1H-pyrrol, 1-[(Triethoxysilyl)methyl]-piperazin, 1-Methyl-4-[(triethoxysilyl)methyl]-piperazin, 1-[(Triethoxysilyl)methyl]-piperidin, 1- [1-(Triethoxysilyl)ethyl] -2-pyrrolidinon, wobei N,N-Dibutylaminomethyl-triethoxysilan, N-Cyclohexylaminomethyl-triethoxysilan, N-Morpholinomethyltriethoxysilan besonders bevorzugt sind. Es können auch Gemische und/oder Teilhydrolysate oder gemischte Teilhydrolysate der genannten Silane der allgemeinen Formel (IV) alleine oder in Mischung mit den Silanen der allgemeinen Formel (IV) eingesetzt werden.

Die Umsetzung des Polysiloxans (V) mit dem Alkoxysilan der allgemeinen Formel (IV) erfolgt vorzugsweise bei Raumtemperatur und Atmosphärendruck. Wegen der hohen Reaktivität sowohl der neu gebildeten Einheiten der allgemeinen Formel (III) als auch der Alkoxysilane der allgemeinen Formel (IV) mit Luftfeuchtigkeit wird die Reaktion vorzugsweise unter Feuchtigkeitsausschluss, beispielsweise in trockener Stickstoffatmosphäre durchgeführt. Um die im Polysiloxan (V) vorliegenden Silanolgruppen möglichst vollständig in Einheiten der allgemeinen Formel (III) umzuwandeln, wird vorzugsweise ein stöchiometrischer Überschuss des Alkoxysilans (IV) bezüglich der Silanolgruppen eingesetzt. Dieser Überschuss beträgt vorzugsweise mindestens 5 Mol-%, besonders bevorzugt mindestens 20 Mol-%, insbesondere mindestens 50 Mol-%. Der Überschuss an Alkoxysilan kann nach der Umsetzung gegebenenfalls unter vermindertem Druck abdestilliert werden. Vorzugsweise verbleibt er in der Mischung. Damit überschüssigem Alkoxysilan (IV) die Vernetzungsgeschwindigkeit sowie der Modul des bei der Feuchtehärtung gebildeten Vulkanisats beeinflusst werden kann, ist es sogar unter Umständen von Vorteil, von vornherein einen höheren Anteil Alkoxysilan (IV) bei der Kondensationsreaktion einzusetzen, und den Überschuss in der vernetzungsfähigen Organo(poly)siloxanmischung (M) zu belassen.

Der Einsatz von Lösungsmittel kann bei der Umsetzung dann von Vorteil sein, wenn die Viskosität der Mischung sehr hoch ist und/oder das Alkoxysilan der allgemeinen Formel (IV) ein Feststoff ist. Vorzugsweise werden Lösungsmittel ohne OH-Gruppen eingesetzt, um einen Austausch der Alkoxygruppen im Alkoxysilan (IV) bzw. im Organo(poly)siloxan (A) zu vermeiden, der die Reaktivität verändern könnte. Lösungsmittel mit alkoholischen OH-Gruppen können dann eingesetzt werden, wenn ein vollständiger oder teilweiser Austausch der im Alkoxysilan (IV) vorliegenden Alkoxygruppen erwünscht ist, beispielsweise um die Reaktivität zu verringern. Art und Molverhältnis sowie die Reaktionsbedingungen wie Zeit, Temperatur und Druck sind dann gegebenenfalls entsprechend anzupassen. Während oder nach der Umsetzung wird vorzugsweise der aus dem Silan der allgemeinen Formel (IV) freigesetzte Alkohol gegebenenfalls mit einem Überschuss des zugesetzten Lösungsmittels mit alkoholischen OH-Gruppen vollständig oder teilweise abdestilliert.

Beispiele für **Lösungsmittel** sind Alkane, wie beispielsweise Pentan, Isopentan, Hexan, Heptan und Isooctan oder ihre Gemische, Aromaten, wie zum Beispiel Benzol, Toluol, Xylole und Mesitylen, halogenierte Kohlenwasserstoffe, wie beispielsweise Methylenchlorid, Chloroform und 1,2,3-Trichlorpropan, Carbonsäureester, wie beispielsweise Butylacetat und Ethylacetat, Ether, wie beispielsweise Diethylether, Tetrahydrofuran, 2-Methyltetrahydrofuran, Methyl(tert.)butylether, Anisol und Dibutylether oder Gemische verschiedener Lösungsmittel. Beispiele für Lösungsmittel mit alkoholischen OH-Gruppen sind Ethanol, n-Propanol, Isopropanol, n-Butanol, Isobutanol, 2-Butanol, n-Pentanol, 1,2-Propandiol, 1,3-Propandiol, Glycerin.

Es können sowohl Mischungen unterschiedlicher Polysiloxane (V) als auch Mischungen an Alkoxysilanen der allgemeinen Formel (IV) miteinander umgesetzt werden. Auch ist eine sukzessive Umsetzung eines Polysiloxans (V) mit mehreren Alkoxysilanen (IV) möglich. Ein großer Vorteil der Erfindung ist, dass Katalysatoren weder für die Kondensationsreaktion des Polysiloxans (V) mit dem Alkoxysilan (IV) noch für die Feuchtigkeitsvernetzung notwendig sind. Beide laufen bei Raumtemperatur innerhalb von wenigen Minuten bis wenigen Stunden ab.

Gegenstand der Erfindung sind auch feuchtigkeits- und strahlenvernetzbare Organo(poly)siloxanmischungen (M), enthaltend Organ(poly)siloxane (A).

Aufgrund der hohen Reaktivität muss Feuchtigkeit während der Lagerung der erfindungsgemäßen Organo(poly)siloxane (A) und in den Mischungen (M), die sie enthalten, ausgeschlossen werden.

Die Photovernetzung in der Organo(poly)siloxanmischung (M) beruht auf einer radikalischen Reaktion. Deshalb enthält die Organo(poly)siloxanmischung (M) vorzugsweise **Photoinitiatoren (B).** Die für die vorliegende Erfindung nützlichen Photoinitiatoren können aus jedem bekannten Typ ausgewählt werden, der bei Bestrahlung Radikale bildet. Geeignete Photoinitiatoren umfassen UV-Initiatoren wie Benzophenon und substituierte Benzophenone, Acetophenon und substituierte Acetophenone, Benzil und seine Dialkylketale, Benzoin und seine Alkylether, Diacylphosphanoxide, insbesondere Dibenzoylphosphanoxide, Xanthon und substituierte Xanthone. Typische Vertreter sind Acetophenon, 2-Ethoxy-2-methylacetophenon, Trichlorbutylacetophenon, 2-Ethoxy-2-phenylacetophenon, Mesityloxid, Propiophenon, Benzophenon, Xanthon, Diethoxyacetophenon (DEAP), Benzoinmethylether, Benzoinethylether, Benzoinisopropylether, Diethoxyxanthon, Thioxanthion, 3-Chlorxanthon, Chlorthioxanthon, Isopropylthioxanthon, Fluorenon, Benzaldehyd, Fluoren, Anthrachinon, Carbazol, N-Vinylcarbazol, 3-Methylacetophenon, 4-Methylacetophenon, 3-Bromacetophenon, 4-Methylbenzophenon, 4-Chlorbenzophenon, 4,4-Dimethoxybenzophenon, 2-Methyl-1-[4-(methylthio)phenyl]-2-morpholinopropan-1-on, Azobisisobutyronitril, N-Methyldiethanolaminbenzophenon, Benzildimethylketal, 2-Hydroxy-2-methyl-propiophenone (bekannt als Darocur^{®} 1173), 2-Hydroxy-2-methyl-propiophenone, Phenylbis(2,4,6-trimethylbenzoyl)-phosphanoxide und Kombinationen davon.

Die Auswahl des Photoinitiators hängt von der Schicht/Auftragsdicke, der Bestrahlungswellenlänge und der gewünschten Aushärtungsgeschwindigkeit ab, sowie von der Mischbarkeit mit den anderen Komponenten der Formulierung. Für UV-Wellenlängen unter 350 nm werden bevorzugt Photoinitiatoren vom alpha-Hydroxyketontyp eingesetzt. Der Photoinitiator wird in einer Konzentration eingesetzt, die für die jeweiligen Anforderungen optimale Aushärtebedingungen ermöglicht. Bevorzugte Bereiche umfassen etwa 0,05 bis etwa 5 Gewichtsprozent, besonders bevorzugt etwa 0,1 bis etwa 1 Gewichtsprozent bezogen auf das Gesamtgewicht der Organo(poly)siloxanmischung (M).

Zur Vermeidung unerwünschter radikalischer Reaktionen können **Stabilisatoren (C)** den erfindungsgemäßen Organo(poly)siloxan-mischungen (M) zugesetzt werden, die diese Nebenreaktionen unterbinden, wie Hydrochinon, Hydrochinonmonomethylether (MEHQ), 4-tert.Butyl-brenzcatechin, 4-Nitrophenol und Butylhydroxytoluol(BHT).

Die Organo(poly)siloxanmischungen (M) können auch **Füllstoffe (D)** enthalten, die zur Optimierung der rheologischen Eigenschaften der unvernetzten Mischung oder der Vulkanisateigenschaften zugesetzt werden können. Beispiele für solche Füllstoffe sind gefällte oder hochdisperse Kieselsäuren wie HDK^{®}, Kreiden, Quarze, organische Füllstoffe wie Stärke, Cellulose, gegebenenfalls Microcellulose, Bambusfasern, Polyethylenfasern, Polyacrylnitrilpulver. Bestimmte Feststoffe können auch zur Veränderung der elektrischen oder thermischen Leitfähigkeit zugesetzt werden. Beispiele dafür sind Ruße, Graphen, Kohlenstoffnanoröhrchen, Metallpulver wie Aluminium-, Eisen-, Silber-, Kupfer- oder Goldpulver, Aluminiumhydroxid, Aluminiumoxide, Titandioxid, Eisenoxide, Glaskugeln, Bariumsulfat, Natriumsulfat, Magnesiumsulfat, Calciumsulfat, Calciumcarbonat, Calciumsilikat, Apatit, Bariumtitanat, Silicium, Siliciumcarbid, Siliciumnitrid, Bornitrid oder Borcarbid. Es können auch mehrere verschiedene Füllstoffe eingesetzt werden. Ihr Anteil an der Organo(poly)siloxanmischung (M) bewegt sich je nach Anwendung im Bereich zwischen 0 und 70%.

Weitere **Additive (E)** sind beispielsweise Farbstoffe wie Fluoreszenzmarker, wie Tinopal OB (BASF), KB-140 und KB-6002 (KUSTOM GROUP), Fluoranthen, Cumarin 120, Pyren-Derivate und Perylen. Haftvermittler **(E)** wie WACKER^{®} Haftvermittler AMS 70, GENIOSIL^{®} Serie: GF31, GF62, GF91, GF92, GF93, GF95 und GF96 oder epoxyfunktionelle Verbindungen wie Dynasylan^{®} Glymo, epoxyfunktionelle Polysiloxane, oder deren Teilhydrolysate, einzeln oder als Mischung können auch zur Verbesserung der Haftung der Vulkanisate der Organo(poly)siloxanmischung (M) z.B. auf Leiterplatten oder Metalluntergründen zugegeben werden.

Zur Modifizierung der Viskosität und des Aushärteverhaltens sowie der Härte des Vulkanisats kann der Organo(poly)siloxan-mischung (M) auch ein sogenannter Reaktivverdünner zugesetzt werden. Dieser sollte vorzugsweise mit einem Organo(poly)-siloxan der Organo(poly)siloxanmischung (M) mischbar sein und während des Vernetzungsprozesses so reagieren, dass er Bestandteil des durch die Vernetzung der erfindungsgemäßen Mischung gebildeten Vulkanisats wird. Die Bezeichnung **Reaktivverdünner** beinhaltet nicht per se, dass der Zusatz dieses Additivs eine Viskositätserniedrigung der erfindungsgemäßen Organo(poly)-siloxanmischung (M) zur Folge hat, sondern bedeutet lediglich, dass der Basisbestandteil, das Organo(poly)siloxan (A), verdünnt wird. Dies kann wirtschaftliche Gründe haben oder zur Verbesserung des Eigenschaftsprofils beitragen.

Beispiele für Reaktivverdünner sind thiolfunktionelle Alkoxysilane wie z.B. 3-Thiopropyltrimethoxysilan, 3-Thiopropylmethyldimethoxysilan, oder deren Teilhydrolysate oder deren Co-Teilhydrolysate mit anderen Alkoxysilanen wie Methyltrimethoxysilan, n-Hexadecyltrimethoxysilan oder Vinyltrimethoxysilan, oder thiolfunktionelle organische Vernetzer, wie Pentaery-thritoltetrakis-(3-mercaptopropionat), Pentaerythritoltetrakis-(2-mercaptoacetat), Pentaerythritoltetrakis-(3-mercaptobutylat) oder Trimethylolpropantris-(2-mercaptoacetat),oder Alkoxysilane der allgemeinen Formel (IV) oder deren Teil- oder Cohydrolysate, sowie auch nicht-funktionelle Alkoxysilane (z.B. Tetraethoxysilan, Dimethyldimethoxysilan, Methyltriethoxysilan, Methyltrimethoxysilan, Ethyltrimethoxysilan, Ethyltriethoxysilan, Vinyltrimethoxysilan, Vinyltriethoxysilan, Allyltriethoxysilan, Allyltrimethoxysilan, n-Hexadecyltrimethoxysilan, n-Octyltriethoxysilan, n-Octyltrimethoxysilan, 2,2,3,3-Tetramethylbutyl-trimethoxysilan, 2,2,3,3-Tetramethylbutyl-triethoxysilan) oder deren Hydrolysate oder Teilhydrolysate, Siliconharze, vorzugsweise mit einvernetzbaren Alkoxygruppen und gegebenenfalls Vinylgruppen und/oder Thiolgruppen, Siliconöle, vorzugsweise solche, die unter vergleichbaren Bedingungen wie die erfindungsgemäßen Organo(poly)siloxane (A) eine Feuchtigkeitsvernetzung eingehen wie beispielsweise beschrieben in WO2018/162033 A1 und reaktive organische Polymere wie beschrieben in DE102011081264 A1**.** Die Feuchtevernetzbarkeit erlaubt eine Vernetzung auch in Schattenbereichen und verhindert das unerwünschte spätere Auswandern unvernetzter Bestandteile aus dem Vulkanisat. Aus diesem Grund werden bevorzugt Additive eingesetzt, die unter ähnlichen Bedingungen feuchtigkeitsvernetzbar sind, wie die erfindungsgemäßen Organo(poly)siloxane (A). Solche Reaktivverdünner werden in den Organo(poly)siloxanmischungen (M) vorzugsweise in Anteilen von maximal 50 Gew.-%, besonders bevorzugt maximal 30 Gew.---%, insbesondere maximal 10 Gew.-% eingesetzt. Sofern der zugesetzte Reaktivverdünner aufgrund vorhandener aliphatisch ungesättigter Reste und/oder Thiolfunktionen auch an der Strahlenhärtung teilnehmen kann, ist vorzugsweise ein stöchiometrischer Ausgleich der entsprechenden aliphatisch ungesättigten Reste mit den Thiolfunktionen vorzunehmen.

Zur Erniedrigung der Viskosität und/oder zur Verbesserung der Mischbarkeit der einzelnen Komponenten der Organo(poly)siloxanmischung (M) können auch Lösungsmittel eingesetzt werden. Dafür kommen dieselben Lösungsmittel in Frage wie oben für den Prozessschritt der Kondensation von Polysiloxan (V) und Alkoxysilan der allgemeinen Formel (IV) beschrieben. Diese werden vorzugsweise nach dem Auftragen aber vor der Aushärtung weitgehend verdampft. Die Bezeichnung Lösungsmittel bedeutet nicht, dass sich alle Komponenten darin lösen müssen. Vorzugsweise wird in der Organo(poly)siloxanmischung (M) Lösungsmittel in Anteilen von 0 bis 50 Gew.-%, besonders bevorzugt 0 bis 30 Gew.-%, insbesondere 0% eingesetzt.

Zur Bereitung der Organo(poly)siloxanmischung (M) können alle Bestandteile der jeweiligen Mischung in beliebiger Reihenfolge miteinander vermischt werden. Das Vermischen erfolgt vorzugsweise bei Raumtemperatur.

Werden die Organo(poly)siloxanmischungen (M) aus mehr als einer Komponente bereitet, so sollte bei denjenigen Komponenten, die Siloxan-Einheiten der allgemeinen Formel (III) enthalten, eine Lagerung in Anwesenheit von Feuchtigkeit ausgeschlossen werden, bei denjenigen Komponenten, die Reste **R^{s}** und **R^{u}** enthalten, sollte eine lichtgeschützte Lagerung erfolgen.

Bestehen die Organo(poly)siloxanmischungen (M) aus einer einzigen Komponente, so sollte eine Lagerung unter Ausschluss von Feuchtigkeit und Lichtstrahlen gewährleistet sein.

Die Organo(poly)siloxanmischungen (M) haben bei 25°C eine Viskosität von vorzugsweise 1 bis 100.000 mPa·s, besonders bevorzugt 30 bis 5.000 mPa·s, insbesondere 30 bis 1.000 mPa·s. Die Organo(poly)siloxanmischungen (M) können für alle Zwecke eingesetzt werden, für die auch bisher bei Zutritt von Feuchtigkeit und/oder durch Bestrahlung vernetzbare Massen eingesetzt werden, insbesondere zur Herstellung von Überzügen.

Beispiele für Substrate, auf denen die erfindungsgemäßen Mischungen zur Herstellung von Überzügen aufgebracht werden können, sind elektronische Leiterplatten, Platinen, keramische Gegenstände oder Glas, einschließlich Glasfasern, wozu wiederum Lichtleitfasern gehören, Papier, wie Kraftpapier oder Pergaminpapier, Pappen einschließlich solcher aus Asbest, Zellglas, Holz, Kork, Kunststofffolien, z.B. Siliconfolien, Polyethylenfolien oder Polypropylenfolien, PET-Folien, gewebtes oder ungewebtes Tuch aus natürlichen Fasern oder synthetischen organischen Fasern oder Glasfasern, Metalle wie Aluminiumfolien, mit Polyethylen beschichtetes Kraftpapier oder mit Polyethylen beschichtete Pappe. Soweit vorstehend Polyethylen genannt wurde, kann es sich dabei jeweils um Hoch-, Mittel- oder Niederdruck-Polyethylen handeln.

Das Auftragen der Organo(poly)siloxanmischungen (M) auf das zu überziehende Substrat kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Messer- oder Rakelbeschichtung.

Die Organo(poly)siloxanmischungen (M) eignen sich ausgezeichnet zum Einbetten von elektrischen oder elektronischen Bauteilen. Beispiele für elektronische Bauteile, die unter Verwendung der Organo(poly)siloxanmischungen (M) eingebettet werden können, sind Hybridschaltkreise, z.B. für elektronische Zündungen, Module, photovoltaische Solargeneratoren und andere Halbleiteranordnungen.

Vorzugsweise werden die Organo (poly)siloxanmischungen (M) bei ihrer Verwendung zur Herstellung von Überzügen oder zum Einbetten von elektrischen oder elektronischen Bauteilen durch Ultraviolettlicht vorvernetzt, wobei die Bestrahlungszeit vorzugsweise so gewählt wird, dass eine grifftrockene Oberfläche auf dem Vulkanisat entsteht. Die Nachvernetzung der bestrahlten Vulkanisatteile oder die Vernetzung in Schattenbereichen erfolgt dann durch Feuchtigkeitsvernetzung der in den Organo-(poly)siloxanmischungen (M) enthaltenen Siloxan-Einheiten der allgemeinen Formel (III) vorzugsweise an Luft. Die Geschwindigkeit dieser Vernetzung ist umso größer, je höher der Anteil der Siloxan-Einheiten der allgemeinen Formel (III) in der Organo-(poly)siloxanmischung (M) ist und je höher die relative Luftfeuchtigkeit ist.

Die Strahlenhärtung der Organo (poly)siloxanmischungen (M) erfolgt vorzugsweise durch Bestrahlung in einer handelsüblichen Bestrahlungsapparatur im Frequenzbereich des UV-Lichts. Die Bestrahlungsbedingungen wie Intensität und Dauer können dabei vom Fachmann leicht an die Gegebenheiten und Erfordernisse angepasst werden. In den Beispielen finden sich typische Bedingungen, die zu einer raschen Hautbildung bis zu einer Tiefenhärtung im mm-Bereich führen. Sie sind jedoch nicht als Einschränkung anzusehen.

Die Viskosität wird im Rahmen der vorliegenden Erfindung nach einer Temperierung auf 23°C mit einem DV 3 P-Rotationsviskosimeter von Fa. A. Paar (Brookfieldsysteme), unter Verwendung von Spindel 5 bei 2,5 UPM entsprechend der ISO 2555 bestimmt.

Alle Viskositätsangaben beziehen sich auf eine Temperatur von 23°C, was im Folgenden auch als Raumtemperatur bezeichnet wird.

### Beispiele:

### Beispiel 1 (Herstellung eines Polysiloxans (V) mit SH:Vi - 2,5:1)

In einem 0,5 l Planschliffkolben mit magnetgekoppeltem Glasflügelrührer, Tropftrichter, Thermometer und Rückflusskühler mit Kolonnenkopf werden 18,7 g Vinylmethyldichlorsilan (99%, WACKER CHEMIE AG), vorgelegt und 152,2 g eines alpha, omega-Dihydroxydimethylpolysiloxans mit durchschnittlich 27 Dimethysiloxyeinheiten (WACKER CHEMIE AG) binnen 20 Minuten bei 25-27°C zudosiert. Nach Zugabe von 0,16 g 3,5-Di-tert-butyl-4-hydroxytoluol (99%, Sigma-Aldrich) als Stabilisator wird auf 100°C aufgeheizt und eine Stunde bei dieser Temperatur gerührt. Anschließend werden 0,54 g "PNCl₂" (WACKER CHEMIE AG, Äquilibrierkatalysator) zugegeben. In die klare Reaktionsmischung dosiert man 45 g 3-Thiopropylmethyldimethoxysilan (≥ 95%, Sigma-Aldrich) innerhalb von 20 Minuten, bevor erneut 0,54 g "PNCl₂" zugefügt werden. Man rührt weitere 2 Stunden bei 100°C, kühlt auf 80°C ab und gibt 30 g 1%ige Salzsäure zu, lässt 15 Minuten rühren und fügt danach eine Suspension von 4 g Magnesiumoxid in 20 g vollentsalztem Wasser zu. Die Reaktionsmischung wird anschließend eine Stunde bei 80°C gerührt, bevor man alle flüchtigen Bestandteile bei 1 hPa bis 110°C ausdestilliert. Nach Abkühlen auf Raumtemperatur wird der Rückstand über eine Druckfilternutsche filtriert. Man erhält eine klare Flüssigkeit mit einer Viskosität von 65 mPa s als Filtrat.

Die Zusammensetzung des Produkts wird über ¹H- und ²⁹Si-NMR bestimmt. Daraus ergibt sich folgende mittlere Zusammensetzung:
X-Me₂SiO_{1/2} : X-MeViSiO_{1/2} : Me₂SiO_{2/2} : MeViSiO_{2/2} : MeSi (CH₂CH₂CH₂-SH)O_{2/2} = 1,9 : 0,1 : 29,5 : 2 : 5,1
X = 54% OH, 46% OMe

Nach 6 Monaten Lagerung bei Raumtemperatur in einer braunen Glasflasche ist die Viskosität lediglich auf 76 mPa s angestiegen.

### Beispiel 1a (Herstellung eines Polysiloxans (V) mit SH:Vi ~ 2,5:1)

Beispiel 1 wird wiederholt mit der Änderung, dass anstelle von 30 g 1%iger Salzsäure 33 g 9%iger Salzsäure eingesetzt werden. Nach analoger Aufarbeitung isoliert man eine ölige Flüssigkeit mit einer Viskosität von 1203 mPa s, die gemäß NMR-Spektren folgende mittlere Zusammensetzung aufweist:
X-Me₂SiO_{1/2} : X-MeViSiO_{1/2} : Me₂SiO_{2/2} : MeViSiO_{2/2} : MeSi (CH₂CH₂CH₂-SH)O_{2/2} = 1,8 : 0,2 : 116,6 : 6,6 : 16,4
X = 95% OH, 5% OMe

Nach 5 Wochen Lagerung bei Raumtemperatur in einer braunen Glasflasche ist das Polymer zu einem klaren Gel vernetzt. Ein niedrigerer Rest-Methoxygehalt ist nachteilig für die Lagerstabilität des Polysiloxans (V).

### Beispiel 2 (Herstellung eines Polysiloxans (V) mit SH:Vi ∼ 1:2)

In einem 1 1 4-Hals-Rundkolben mit magnetgekoppeltem Glasflügelrührer, Tropftrichter, Thermometer und Rückflusskühler mit Kolonnenkopf werden 18,7 g Vinylmethyldichlorsilan (99%, WACKER CHEMIE AG), vorgelegt und 47,7 g eines alpha, omega-Dihydroxydimethylpolysiloxans mit einem Anteil von 25mol% Methylvinylsiloxy-Einheiten (WACKER CHEMIE AG) binnen 10 Minuten bei 24°C zudosiert. Anschließend fügt man 104,5 g eines alpha, omega-Dihydroxydimethylpolysiloxans mit durchschnittlich 27 Dimethysiloxyeinheiten (WACKER CHEMIE AG) binnen 20 Minuten zu. Nach Zugabe von 0,16 g 3,5-Di-tert-butyl-4-hydroxytoluol (99%, Sigma-Aldrich) als Stabilisator wird auf 100°C aufgeheizt und eine Stunde bei dieser Temperatur gerührt. Anschließend werden 0,5 g Trifluormethansulfonsäure (Merck) zugegeben. In die klare Reaktionsmischung dosiert man 22,7 g 3-Thiopropylmethyldimethoxysilan (≥ 95%, Sigma-Aldrich) innerhalb von 20 Minuten, bevor erneut 0,5 g Trifluormethansulfonsäure zugefügt werden. Man rührt weitere 2 Stunden bei 100°C, kühlt auf 80°C ab und gibt eine Suspension von 4 g Magnesiumoxid in 46,6 g vollentsalztem Wasser zu. Die Reaktionsmischung wird anschließend eine Stunde bei 80°C gerührt, bevor man alle flüchtigen Bestandteile bei 1 hPa bis 110°C ausdestilliert.

Nach Abkühlen auf Raumtemperatur wird der Rückstand über eine Druckfilternutsche filtriert. Man erhält eine klare Flüssigkeit mit einer Viskosität von 473 mPa s als Filtrat. Die Zusammensetzung des Produkts wird über ¹H- und ²⁹Si-NMR bestimmt. Daraus ergibt sich folgende mittlere Zusammensetzung: X-Me₂SiO_{1/2} : X-MeViSiO_{1/2} : Me₂SiO_{2/2} : MeViSiO_{2/2} : MeSi (CH₂CH₂CH₂-SH)O_{2/2} = 1,6 : 0,4 : 48,2 : 6,7 : 4
X = 67% OH, 33% OMe

### Beispiel 3 (Herstellung eines Organo(poly)siloxans (A) mit SH:Vi ∼ 1:2)

60 g Polysiloxan aus Beispiel 2 wird mit 18,6 g N,N-Di-n-butylaminomethyl-triethoxysilan bei Raumtemperatur unter Rühren vermischt. Unmittelbar danach werden ¹H- und ²⁹Si-NMR-Spektren der klaren Mischung aufgenommen. Aus den Integralen wird das Molverhältnis der einzelnen Siloxy-Einheiten berechnet. Auf 2 Endgruppen normiert ergibt sich folgende Zusammensetzung:
MeO-Me₂SiO_{1/2} : MeO-MeViSiO_{1/2} : Me₂SiO_{2/2} : MeViSiO_{2/2} :
MeSi(CH₂CH₂CH₂-SH)O_{2/2} : (nBu)₂N-CH₂-Si(OEt)₂O_{1/2} : (nBu)₂N-CH₂-Si(OEt)₃ = 0,5 : 0,2 : 46,3 : 6 : 3, 7 : 1,3 : 3, 4
Demnach haben alle SiOH-Gruppen mit dem Trialkoxysilan reagiert, während die überschüssige Menge Silan, sowie die Methoxy-Endgruppen unverändert vorliegen.

### Beispiel 4 - Vernetzungstests

10 g Produkt aus Beispiel 3 werden mit 1 g eines Tetraethoxy-Teilhydrolysats (WACKER TES40), 4 g eines Siliconharzes (MQ-Harz 803) und 0,2 g Photoinitiator Darocur^{®} 1173 (Sigma-Aldrich, 2-methyl-1-phenyl-propan-2-ol-1-one) vermischt. Ein Teil der klaren Mischung mit einer Viskosität von 709 mPa s wird in einer Schichtdicke von ca. 0,1 mm in eine Glaswanne gegossen und vernetzt bei UV-Bestrahlung in einer UV Kammer Hönle, Hg-Halogenid-Lampe, 290-415 nm, 2000W) innerhalb von 15 Sekunden zu einem klaren Vulkanisat.

Ohne Bestrahlung bildet sich an Luft innerhalb von ca. 45 Minuten eine trockene, klebfreie Haut auf der Oberfläche der Mischung, nach wenigen Stunden ist die Probe durchvernetzt.

### Beispiel 5 (Herstellung eines Organo(poly)siloxans (A) mit SH:Vi ~ 1:2)

In einem 0,5 1 3-Hals-Rundkolben mit magnetgekoppeltem Glasflügelrührer, Tropftrichter, Thermometer und Rückflusskühler mit Kolonnenkopf werden 207,5 g eines alpha, omega-Dihydroxydimethylpolysiloxans mit durchschnittlich 420 Dimethysiloxyeinheiten (WACKER CHEMIE AG, CT 6000) vorgelegt und 94,6 g eines alpha, omega-Dihydroxydimethylpolysiloxans mit einem Anteil von 25 mol% Methylvinylsiloxy-Einheiten (WACKER CHEMIE AG) zugegeben. Danach werden 37,1 g Vinylmethyldichlorsilan (99%, WACKER CHEMIE AG) binnen 25 Minuten zudosiert. Man fügt 0,3 g 3,5-Di-tert-butyl-4-hydroxytoluol (99%, Sigma-Aldrich) hinzu, heizt auf 100°C auf und rührt ca. 25 Minuten bei dieser Temperatur. Nach Zugabe von 0,4 g einer 10%igen Lösung von "PNCl2" in Toluol wird weitere 2 Stunden bei 100°C gerührt.

In die nun klare Reaktionsmischung dosiert man 45 g 3-Thiopropylmethyldimethoxysilan (≥ 95%, Sigma-Aldrich) innerhalb von 30 Minuten, bevor erneut 0,4 g der 10%igen "PNC12"-Lösung zugefügt werden. Man rührt weitere 2 Stunden bei 100°C, kühlt auf 80°C ab und gibt eine Suspension von 7,9 g Magnesiumoxid in 92,7 g vollentsalztem Wasser zu. Es wird weitere 75 Minuten bei 80°C gerührt, dann lässt man abkühlen. Beim Stehen separiert die Reaktionsmischung in eine Öl- und eine Wasserphase. Die Feststoffanteile werden aus der Ölphase durch Zentrifugieren bei 5000 Upm abgetrennt, die klare Flüssigkeit wird anschließend bei 5 hPa bis 110°C ausgeheizt.

Man isoliert eine klare Flüssigkeit mit einer Viskosität von ca. 1500 mPa s. Die Zusammensetzung des Produkts wird über ¹H- und ²⁹Si-NMR bestimmt. Daraus ergibt sich folgende mittlere Zusammensetzung:
X-Me₂SiO_{1/2} : X-MeViSiO_{1/2} : Me₂SiO_{2/2} : MeViSiO_{2/2} : MeSi (CH₂CH₂CH₂-SH)O_{2/2} = 1,58 : 0,42 : 45,3 : 6,2 : 3,7
X = 53% OH, 47% OMe

### Beispiel 6a (Herstellung eines Organo(poly)siloxans (A) mit SH:Vi ~ 1:2)

20 g des Polysiloxan aus Beispiel 5 werden mit 4,64 g N,N-Di-n-butylaminomethyltriethoxsilan bei Raumtemperatur unter Rühren vermischt.

### Beispiel 6b (Herstellung eines erfindungsgemäßen Polysiloxans mit SH:Vi ∼ 1:2)

20 g des Polysiloxans aus Beispiel 5 werden mit 4,4 g N-Cyclohexylaminomethyltriethoxsilan bei Raumtemperatur unter Rühren vermischt.

### Beispiel 7 Herstellung eines Organo(poly)siloxans (A)

### 7a) (Herstellung eines Polysiloxan (V) mit SH:Vi ∼ 1:2) und 2*0,01 Gew.-% PNCl₂ Kat.

In einem 2 1 Planschliffkolben mit magnetgekoppeltem Glasflügelrührer, Tropftrichter, Thermometer und Rückflusskühler mit Kolonnenkopf werden 56 g Vinylmethyldichlorsilan (99%, WACKER CHEMIE AG), vorgelegt und nacheinander 143 g eines alpha, omega-Dihydroxydimethylpolysiloxans mit einem Anteil von 25mol% Methylvinylsiloxy-Einheiten (WACKER CHEMIE AG) und 313,5 g eines alpha, omega-Dihydroxydimethylpolysiloxans mit durchschnittlich 27 Dimethysiloxyeinheiten (WACKER CHEMIE AG) jeweils binnen einer halben Stunde bei 25-27°C zudosiert. Nach Zugabe von 0,5 g 3,5-Di-tert-butyl-4-hydroxytoluol (99%, Sigma-Aldrich) als Stabilisator wird auf 100°C aufgeheizt und eine Stunde bei dieser Temperatur gerührt. Anschließend werden 0,6 g 10%ige "PNC12"-Lösung in Xylol (WACKER CHEMIE AG, Äquilibrierkatalysator) (entspricht 0,01 Gew.-% bezogen auf die Gesamtmischung) zugegeben. In die klare Reaktionsmischung dosiert man 68 g 3-Thiopropylmethyldimethoxysilan (≥ 95%, Sigma-Aldrich) innerhalb von 30 Minuten, bevor erneut 0,6 g 10%ige "PNCl2"-Lösung zugefügt werden. Man rührt weitere 2 Stunden bei 100°C, kühlt auf 80°C ab und fügt danach eine Suspension von 12 g Magnesiumoxid in 140 g vollentsalztem Wasser zu. Die Reaktionsmischung wird anschließend 75 Minuten bei 75°C-80°C gerührt, bevor man alle flüchtigen Bestandteile bei 1 hPa bis 110°C ausdestilliert. Nach Abkühlen auf Raumtemperatur wird der Rückstand über eine Druckfilternutsche filtriert. Man erhält eine klare Flüssigkeit mit einer Viskosität von 42 mPa s als Filtrat. Die Zusammensetzung des Produkts wird über ¹H- und ²⁹Si-NMR bestimmt. Daraus ergibt sich folgende mittlere Zusammensetzung:
X-Me₂SiO_{1/2} : X-MeViSiO_{1/2} : Me₂SiO_{2/2} : MeViSiO_{2/2} : MeSi (CH₂CH₂CH₂-SH)O_{2/2} = 1,74 : 0,26 : 21 : 3 : 1,7
X = 39% OH, 61% OMe

### 7b) Beispiel 7a) wird wiederholt mit 2*0,1 Gew.-% "PNCl2" bezogen auf die Gesamtmischung.

Man isoliert nach analoger Aufarbeitung eine klare Flüssigkeit mit einer Viskosität von 65 mPa s. Die Zusammensetzung des Produkts wird über ¹H- und ²⁹Si-NMR bestimmt. Daraus ergibt sich folgende mittlere Zusammensetzung:
X-Me₂SiO_{1/2} : X-MeViSiO_{1/2} : Me₂SiO_{2/2} : MeViSiO_{2/2} : MeSi (CH₂CH₂CH₂-SH)O_{2/2} = 1,67 : 0,33 : 27 : 3,8 : 2
X = 64% OH, 36% OMe

### 7c) Herstellung eines Organo(poly)siloxans (A)

60 g des Polymers aus Beispiel 7a) (laut NMR-Analytik 21 mmol SiOH) werden mit 7,7 g (25 mmol) N,N-Di-n-butylaminomethyl-triethoxysilan, 11,2 g (59 mmol) Vinyltriethoxysilan (99%, WACKER CHEMIE AG) und 0,3 g 3,5-Di-tert-butyl-4-hydroxytoluol (99%, Sigma-Aldrich) als Stabilisator bei Raumtemperatur unter Rühren vermischt. Unmittelbar danach werden ¹H- und ²⁹Si-NMR Spektren der klaren Mischung aufgenommen. Aus den Integralen wird das Molverhältnis der einzelnen Siloxy-Einheiten berechnet. Auf 2 Endgruppen normiert ergibt sich folgende Zusammensetzung:
MeO-Me₂SiO_{1/2} : MeO-MeViSiO_{1/2} : Me₂SiO_{2/2} : MeViSiO_{2/2} :
MeSi (CH₂CH₂CH₂-SH)O_{2/2} : (nBu) ₂N-CH₂-Si(OEt)₂O_{1/2} : ViSi(OEt)₂O_{1/2} : (nBu)₂N-CH₂-Si(OEt)₃ : ViSi(OEt)₃ = 1,1 : 0,1 : 27 : 3,3 : 1,7 : 0,6 : 0,2 : 0,2 : 2 => 60% MeO, 30% DBA-DEO, 10% Vi-DEO. Demnach haben alle SiOH-Gruppen mit dem Trialkoxysilan reagiert, während die überschüssige Menge Silan, sowie die Methoxy-Endgruppen unverändert vorliegen.

An Luft (23° C/50% relative Luftfeuchtigkeit) vernetzt das Polymer innerhalb von wenigen Stunden zu einem gelartigen Vulkanisat. Die Mischung des Polymers mit 1 Gew.-% Darocur 1173 vernetzt bei UV-Bestrahlung in einer UV Kammer (UVACUBE, Hönle, Hg-Halogenid-Lampe, 290-415 nm, 2000W) innerhalb von 15 Sekunden zu einem klaren Vulkanisat.

### Vernetzung von Polymer aus Beispiel 6

Jeweils 1 Gewichtsprozent 2-Methyl-1-phenyl-propan-2-ol-1-on (Darocur 1173) oder 1-Hydroxycyclohexylphenylketon (Omnirad 184), oder Benzophenon (Omnirad BP Flakes) oder 2,2-Dimethoxy-2-phenylacetophenon (Omnirad BDK) (alle Photoinitiatoren sind kommerziell erhältlich von IGM, North Carolina) werden dem Siloxan aus Beispiel 6a bzw. 6b hinzugefügt. Die Mischung, ein einem Rakel (von BYK Inc.) auf eine Polyesterfolie mit einer Schichtdicke von 0,1 mm aufgetragen. Dann wird das beschichtete Polyestersubstrat in Gegenwart von Luft bestrahlt. Die Beschichtung härtet unabhängig vom Photoinitiator jeweils nach 30 Sekunden ultravioletter Bestrahlung in einer UV-Kammer (UVACUBE 2000 von HONLE, ausgestattet mit einer Quecksilbermetallhalogenid (F-Lampe) Lichtquelle 1000 mJ/cm2, in einem Wellenlängenbereich von 290 nm bis 415 nm) vollständig aus und bildet eine trockene Oberfläche. Wenn eine weitere Probe in einer Form für Shore-Härte-Messungen auf die gleiche Weise in Gegenwart von Luft (50% relative Luftfeuchtigkeit, 23°C) und unter Lichtausschluss stehengelassen wird, erfolgt innerhalb weniger als 40 Minuten Hautbildung (klebfrei). Unmittelbar nach der UV-Vernetzung liegt die Shore OO Härte des Vulkanisats bei 50, nach anschließender einwöchiger Lagerung des Vulkanisats bei 23°C und 50% relativer Luftfeuchtigkeit ist aufgrund der Feuchtigkeitsvernetzung mit 65 das Maximum erreicht. Lagertest:
Die Mischungen der Polymere 6a) und 6b) jeweils mit 1 Gewichtsprozent Omnirad BDK bzw. Benzophenon zeigen nach 2 Wochen Lagerung bei 70°C im geschlossenen Gefäß unter Lichtausschluss unverändertes UV- und Feuchtigkeitsvernetzungsverhalten.

Zur automatisierten Prüfung der Haftung auf den beschichteten Leiterplatten wird 1% ELASTOSIL^{®} Farbpaste FL UV-Fluoreszierender Farbstoff von WACKER in die entsprechende Formulierung eingearbeitet.

### Prüfung:

Zur Prüfung der obigen Beispiele werden handelsübliche Leiterplatten (Uxcell^{®} 3 cm x 7 cm FR-4) verwendet. Diese Leiterplattensubstrate sind 2-seitig verzinnte Prototypen. Vor der Beschichtung wurde 50µl Flussmittel (NC265LR) aufgetragen und über Nacht auf der Testoberfläche getrocknet. Siloxan P2 und PI werden wie oben beschrieben gemischt, dann werden die aufgetragenen Beschichtungen zunächst mit UV-Licht gehärtet und die Proben zur vollständigen Aushärtung unter Luftfeuchtigkeit 4 Tage lang aufbewahrt. Vollständig ausgehärtete Leiterplatten werden auf Wärme und Feuchtigkeit (85 °C/85% r.F., über zwei Wochen) getestet. Auch die Temperaturstabilität (150 °C, über 2 Wochen) sowie Temperaturwechsel (1000 Stunden -40 °C/ 140 °C) werden getestet. Nach diesen Tests wird die Adhäsion nach der Standard-Kreuzschraffur-Methode ASTM 3359-09, eine robuste Methode zur Bestimmung der Haftung von Beschichtungen auf Substraten, bewertet. Dazu wird die vollständig ausgehärtete Beschichtung gitterförmig mit einem Skalpell bis zur Substratoberfläche eingeschnitten. Danach wird ein Standardklebeband auf die Vulkanisatoberfläche aufgebracht und abgezogen. Die Bewertung/Quantifizierung der Haftung erfolgt dann gemäß der Anzahl der verbliebenen Quadrate anhand eines Piktogramms, das in ASTM 3359-09 beschrieben ist. Die Ergebnisse sind in der folgenden Tabelle dargestellt. Bei der Prüfung von Prototyp-Platten mit den oben genannten Beispielen wird sowohl eine ausgezeichnete Haftung bereits ohne Zusatz von Haftvermittlern als auch eine ausgezeichnete Stabilität von Vulkanisatfestigkeit und Haftung festgestellt. Tabelle 1 zeigt die Ergebnisse an.

**Tabelle 1**

| Polymer | Photoinitiator | Haftung unmittelbar nach UV+Feuchtehärtung | Nach 2 Wochen 150°C | Nach 1000h T-Wechselcyclen -40°C - 140°C |
|---|---|---|---|---|
| 6a | 1% Omnirad BDK | 4B¹⁾ | 4B | 4B |
| 6a | 1% Benzophenon | 5B | 4B | 4B |
| 6b | 1% Omnirad BDK | 5B | 5B | 4B |
| 6b | 1% Benzophenon | 4B | 4B | 5B |

| | | | | |
|---|---|---|---|---|
| 1) Die Skala reicht von 0B (schlechte Haftung) bis 5B (beste Haftung, an keiner Stelle Ablösung vom Untergrund) | | | | |

## Patentansprüche

1. Organo(poly)siloxane (A), bestehend aus Einheiten der allgemeinen Formel (I)
**RₙSiO(_{4-n/2}** ( I)
wobei
**n** für 0, 1, 2 oder 3 steht, wobei der Anteil der Einheiten mit n = 0 nicht mehr als 50 Mol-% und der Anteil der Einheiten mit n = 1 nicht mehr als 60 Mol-%, jeweils bezogen auf alle Einheiten der allgemeinen Formel (I) beträgt,
**R** ausgewählt ist aus den Resten **R¹, -OR², R^{u}, R^{S}** und **Q,** wobei
**R¹** einen einwertigen substituierten oder unsubstituierten Kohlenwasserstoffrest mit 1 bis 18 C-Atomen bedeutet,
**R²** ein Wasserstoffatom oder einen einwertigen, substituierten oder unsubstituierten Kohlenwasserstoffrest mit 1 bis 6 C-Atomen bedeutet,
**R^{u}** einen einwertigen aliphatisch ungesättigten Kohlenwasserstoffrest mit 2 bis 18 C-Atomen bedeutet,
**R^{s}** einen einwertigen thiolfunktionellen Kohlenwasserstoffrest mit 1 bis 18 C-Atomen bedeutet,
**Q** ein stickstofffunktioneller Rest der Formel (II) ist
**-CR⁵R⁶-NR⁴R³** (II),
wobei
**R³** und **R⁴** unabhängig voneinander Wasserstoff oder einen substituierten oder unsubstituierten Kohlenwasserstoffrest mit 1 bis 18 C-Atomen bedeuten und,
**R⁵** und **R⁶** unabhängig voneinander Wasserstoff oder den Methylrest bedeuten, mit der Maßgabe, dass das Organo(poly)siloxan (A) pro Molekül mindestens eine Einheit der allgemeinen Formel (III),
**Q-Si (OR⁷)₂O_{1/2}** (III)
in der **R⁷** die Bedeutungen von **R²** aufweist;
mindestens 1 aliphatisch ungesättigten Rest **R^{u};**
sowie mindestens 2 thiolfunktionelle Reste **R^{S}** enthält.

2. Organo(poly)siloxane (A) nach Anspruch 1, bei denen **R^{u}** ein Vinyl- oder Allylrest ist.

3. Organo(poly)siloxane (A) nach einem der vorangehenden Ansprüche, bei denen der Rest **R^{s}** einen linearen Thioalkylrest mit 3 bis 6 Kohlenstoffatomen bedeutet.

4. Organo(poly)siloxane (A) nach einem der vorangehenden Ansprüche, bei denen die Einheiten **-NR⁴R³** ausgewählt werden aus Di-n-butylamino-, Anilino-, Cylohexylamino- N-Morpholino-Einheiten.

5. Organo(poly)siloxane (A) nach einem der vorangehenden Ansprüche, welche 10 bis 400 Einheiten der allgemeinen Formel (I) aufweisen.

6. Organo(poly)siloxane (A) nach einem der vorangehenden Ansprüche, bei denen mindestens 0,5 Mol-% aller Einheiten der allgemeinen Formel (I) eine Einheit der allgemeinen Formel (III) sind.

7. Organo(poly)siloxane (A) nach einem der vorangehenden Ansprüche, bei denen das Molverhältnis der Reste **R^{s}** zu den Resten **R^{u}** im Bereich zwischen 0,3 und 5 liegt.

8. Verfahren zur Herstellung der Organo(poly)siloxane (A), bei dem Alkoxysilane der allgemeinen Formel (IV)
**(R²O)₃Si-CR⁵R⁶-NR⁴R³** (IV)
mit Silanolgruppen eines Polysiloxans (V), welches Silanolgruppen und sowohl aliphatisch ungesättigte Reste **R^{u}** als auch thiolfunktionelle Gruppen **R^{s}** enthält, kondensiert werden.

9. Feuchtigkeits- und strahlenvernetzbare Organo(poly)siloxanmischungen (M), enthaltend Organ(poly)siloxane (A) gemäß Anspruch 1 bis 7.

10. Organo(poly)siloxanmischungen (M) nach Anspruch 9, welche einen **Photoinitiator (B)** enthalten.

11. Organo(poly)siloxanmischungen (M) nach Anspruch 9 oder 10, welche einen **Stabilisator (C)** zur Vermeidung unerwünschter radikalischer Reaktionen enthalten.

## Claims

1. An organo(poly)siloxane (A) consisting of units of general formula (I)
**RₙSiO_{(4-n/2}** (I)
where
**n** is 0, 1, 2 or 3, wherein the proportion of units in which n = 0 is not more than 50 mol% and the proportion of units in which n = 1 is not more than 60 mol%, in each case based on all units of general formula (I),
**R** is selected from the radicals **R¹, -OR², R^{u}**, **R^{S}** and **Q,** where
**R¹** denotes a monovalent substituted or unsubstituted hydrocarbon radical having 1 to 18 carbon atoms,
**R¹** denotes a hydrogen atom or a monovalent substituted or unsubstituted hydrocarbon radical having 1 to 6 carbon atoms,
**R^{u}** denotes a monovalent aliphatic unsaturated hydrocarbon radical having 2 to 18 carbon atoms,
**R^{s}** denotes a monovalent thiol-functionalized hydrocarbon radical having 1 to 18 carbon atoms,
**Q** is a nitrogen functional group of formula (II)
**-CR⁵R⁶-NR⁴R³** (II),
where
**R³** and **R⁴** each independently denote hydrogen or a substituted or unsubstituted hydrocarbon radical having 1 to 18 carbon atoms and
**R⁵** and **R⁶** each independently denote hydrogen or the methyl radical, with the proviso that the organo(poly)siloxane (A) contains per molecule at least one unit of general formula (III),
**Q-Si(OR⁷)₂O_{1/2}** (III)
in which **R⁷** is as defined for **R²**;
at least 1 aliphatically unsaturated radical **R^{u};**
and at least 2 thiol-functionalized groups**R^{s}**

2. The organo(poly)siloxane (A) as claimed in claim 1, in which **R^{u}** is a vinyl or allyl radical.

3. The organo(poly)siloxane (A) as claimed in either of the preceding claims, in which the radical **R^{S}** denotes a linear thioalkyl radical having 3 to 6 carbon atoms.

4. The organo(poly)siloxane (A) as claimed in any of the preceding claims, in which the units **-NR⁴R³** are selected from di-n-butylamino, anilino, cyclohexylamino, and N-morpholino units.

5. The organo(poly)siloxane (A) as claimed in any of the preceding claims, which have 10 to 400 units of general formula (I).

6. The organo(poly)siloxane (A) as claimed in any of the preceding claims, in which at least 0.5 mol% of all units of general formula (I) are a unit of general formula (III).

7. The organo(poly)siloxane (A) as claimed in any of the preceding claims, in which the molar ratio of the radicals **R^{S}** to the radicals **R^{u}** is within a range between 0.3 and 5.

8. A process for preparing the organo(poly)siloxanes (A), in which alkoxysilanes of general formula (IV)
**(R²O)₃Si-CR⁵R⁶-NR⁴R³** (IV)
undergo condensation with silanol groups of a polysiloxane (V) that contains silanol groups and both aliphatically unsaturated radicals **R^{u}** and thiol-functionalized groups**R^{s}.**

9. A moisture- and radiation-crosslinkable organo(poly)siloxane mixture (M) comprising an organo(poly)siloxane (A) as claimed in claims 1 to 7.

10. The organo(poly)siloxane mixture (M) as claimed in claim 9, which comprises a **photoinitiator (B).**

11. The organo(poly)siloxane mixture (M) as claimed in claim 9 or 10, which comprises a **stabilizer (C)** to avoid unwanted free-radical reactions.

## Revendications

1. Organo (poly) siloxanes (A), constitués d'unités de formule générale (I)
**RₙSiO_{(4-n/2}** (I)
dans laquelle
**n** est 0, 1, 2 ou 3, où la proportion des unités avec n = 0 n'est pas supérieure à 50 % en moles et la proportion d'unités avec n = 1 n'est pas supérieure à 60 % en moles, chacune basée sur toutes les unités de la formule générale (I),
**R** est choisi parmi les radicaux **R¹, -OR², R^{u}, R^{s}** et **Q,**
**R¹** signifie un radical hydrocarboné substitué ou non substitué monovalent ayant 1 à 18 atomes de carbone,
**R²** signifie un atome d'hydrogène ou un radical hydrocarboné substitué ou non substitué, monovalent ayant 1 à 6 atomes de carbone,
**R^{u}** signifie un radical hydrocarboné monovalent aliphatiquement insaturé ayant 2 à 18 atomes de carbone,
**R^{s}** signifie un radical hydrocarboné monovalent à fonction thiol ayant 1 à 18 atomes de carbone ;
**Q** est un radical à fonction azote de formule (II)
**-CR⁵R⁶-NR⁴R³** (II)
dans laquelle
**R³** et **R⁴** signifient, indépendamment l'un de l'autre, hydrogène ou un radical hydrocarboné substitué ou non substitué ayant 1 à 18 atomes de carbone, et
**R⁵** et **R⁶** signifient, indépendamment l'un de l'autre, hydrogène ou le radical méthyle,
à condition que l'organo(poly)siloxane (A) contienne au moins une unité de formule générale (III) par molécule, **Q-Si(OR⁷)₂O_{1/2}** (III)
dans laquelle **R⁷** présente les significations de **R²** ;
au moins 1 radical aliphatiquement insaturé **R^{u}** ;
ainsi qu'au moins 2 radicaux **R^{s}** à fonction thiol.

2. Organo(poly)siloxanes (A) selon la revendication 1, dans lesquels **R^{u}** est un radical vinyle ou allyle.

3. Organo(poly)siloxanes (A) selon l'une quelconque des revendications précédentes, dans lesquels le radical **R^{s}** signifie un radical thioalkyle linéaire ayant 3 à 6 atomes de carbone.

4. Organo(poly)siloxanes (A) selon l'une quelconque des revendications précédentes, dans lesquels les unités **-NR⁴R³** sont choisies parmi des unités di-n-butylamino, anilino, cylohexylamino, N-morpholino.

5. Organo(poly)siloxanes (A) selon l'une quelconque des revendications précédentes, qui présentent 10 à 400 unités de formule générale (I).

6. Organo(poly)siloxanes (A) selon l'une quelconque des revendications précédentes, dans lesquels au moins 0,5 % en moles de toutes les unités de formule générale (I) sont une unité de formule générale (III).

7. Organo(poly)siloxanes (A) selon l'une quelconque des revendications précédentes, dans lesquels le rapport molaire des radicaux **R^{s}** sur les radicaux **R^{u}** se situe dans le domaine compris entre 0,3 et 5.

8. Procédé pour la production des organo(poly)siloxanes (A), dans lequel des alcoxysilanes de la formule générale (IV)
**(R²O)₃Si-CR⁵R⁶-NR⁴R³** (IV)
sont condensés avec des groupes silanol d'un polysiloxane (V), qui contient des groupes silanol et à la fois des radicaux aliphatiquement insaturés **R^{u}** et des groupes à fonction thiol **R^{s}.**

9. Mélanges (M) d'organo(poly)siloxanes réticulables à l'humidité et par rayonnement, contenant des organo(poly)siloxanes (A) selon les revendications 1 à 7.

10. Mélanges (M) d'organo(poly)siloxanes selon la revendication 9, qui contiennent un **photoinitiateur (B).**

11. Mélanges (M) d'organo(poly)siloxanes selon la revendication 9 ou 10, **caractérisés en ce qu'**ils contiennent un **stabilisant (C)** pour éviter des réactions radicalaires indésirables.
